(19) Europäisches Patentamt

European Patent Office

Office européen des brevets

(11) EP 1 522 961 A2

(12) **EUROPEAN PATENT APPLICATION**

(43) Date of publication:
**13.04.2005 Bulletin 2005/15**

(51) Int Cl.7: **G06T 5/00**

(21) Application number: **04256228.0**

(22) Date of filing: **08.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **09.10.2003 GB 0323680**

(71) Applicant: TA Vision Laboratoiries Ltd.
Watford WD24 7ND (GB)

(72) Inventor: **Atherton, Timothy**
**Watford, WD24 7ND (GB)**

(74) Representative: **W.P. THOMPSON & CO.**
**55 Drury Lane**
**London WC2B 5SQ (GB)**

(54) **Deconvolution of a digital image**

(57) The invention provides for a method and related computer program for deconvolving a digital image captured by way of a lens arrangement of an image capture device including, in combination with an expression representative of the optical transfer function of the lens arrangement, the step of retrieving metadata associated with the image capture device at the time of image capture and employing retrieved metadata as at least one parameter within the said expression.

fig. 2

EP 1 522 961 A2

**Description**

The present invention relates to the deconvolution of digital images acquired with a digital camera or other image capture device.

With image capture devices such as cameras, and with regard to the present invention digital cameras, the camera optics map a point in the world to an extended region on the image plane. When the size of the point on the image plane is a minimum the camera is said to be "in focus". An out of focus image is formed when the camera optics are focused at a depth that is either in front of or behind the point object in the world, the point object is "blurred".

Real objects have a physical extent but they can nevertheless be considered as composed of a large set of contiguous or non-contiguous points. Each of those points in the world, and that are visible from the camera's position, can be considered to be mapped to the image plane via the camera's optics. For an extended object at an approximately uniform depth the resultant image will blurred to a minimum extent when the camera is in focus and by some larger amount when the camera is out of focus.

The present invention relates to the generation of a model of the lens and which serves to assist with deconvolution, namely the process of reversing the blur due to out of focus camera optics.

In order to reverse the blurring effect information concerning the manner in which the camera optics blurs an image is required. Extensive studies exist in this field, most notably the work of Hopkins (Hopkins, H. H. 1955 The Frequency Response of a Defocused Optical System. *Proc R. Soc. Lond A*, 91-103.) who derived an expression for the image plane Optical Transfer Function (OTF) of a defocused optical system. The OTF is the Fourier transform of the Point Spread Function (psf).

For an optical system with an aperture of radius A, the circularly symmetric OTF is given by:

$$T(s) = \frac{4}{\pi a}\cos[as/2]\left\{\beta J_1(a) + \sum_{n=1}^{\infty}(-1)^{n+1}\frac{\sin[2n\beta]}{2n}[J_{2n-1}(a) - J_{2n+1}(a)]\right\}$$
$$- \frac{4}{\pi a}\sin[as/2]\left\{\sum_{n=1}^{\infty}(-1)^{n+1}\frac{\sin[2n\beta]}{2n}[J_{2n}(a) - J_{2n+2}(a)]\right\} \qquad (1)$$

where:
$a = 2kws,$

$$\beta = \cos^{-1}\left(\frac{q}{f_c}\right),$$

$s = \frac{2q}{f_c}, \; q^2 = u^2 + v^2, \; f_c = \frac{2A}{\lambda d_i}, \; k = \frac{2\pi}{\lambda}$

and u, v are the coordinates in frequency domain, $\lambda$ is the wavelength of the light used in the imaging, and w is the parameter describing the degree of defocus.

This expression requires complex computations in the infinite summations for each point in the frequency domain. Although circular symmetry of the OTF can reduce these computations, it nevertheless remains computationally demanding.

An approximation to Equation 1, the Stokseth approximation, that significantly reduces the computation has been proposed (Stokseth, P. A. 1969 Properties of a Defocused Optical System. *Journal of the Optical Society of America* 59, 1314-1321.):

$$T(s) = \left(1 - 0.069s + 0.0076s^2 + 0.043s^3\right)jinc\left[4kw\left(1 - \frac{|s|}{2}\right)\frac{|s|}{2}\right] \qquad (2)$$

where the parameters are as for Equation 1. These parameters include the lens aperture A, the wavelength of the light

$\lambda$, the distance of the light sensitive surface from the lens $d_i$, and the defocus amount w.

Conventionally, a crude approximation used to describe the psf of a digital camera lens in deconvolution comprises a simple circle having a radius controlled by the user of the image editing software as part of the deconvolution process.

Such an approximation has arisen since the most prominent property of the psf of an out of focus lens is its approximate circular symmetry. This has led to a simple circle being used to characterize the psf of an out of focus lens. In many embodiments of deconvolution the radius of this circle is the only unknown that is modifiable. The user of many image editing computer programs that provide a deconvolution has some method available for modifying the radius of this "circle of confusion". This may take the form of a slider control that can be adjusted to vary the radius of the circle, or a numeric input to enter a value directly.

Whilst the psf of a real lens may be approximated by a circle, on inspection it often includes circularly symmetric structure. This structure is missing from an approximation of the psf as a pure circle.

The present invention seeks to provide for a method of deconvolving a digital image, and including such method when embodied in a computer program, having advantages over known such methods.

According to one aspect of the present invention there is provided a method of deconvolving a digital image captured by way of a lens arrangement of an image capture device including, in combination with an expression representative of the optical transfer function of the lens arrangement, the step of retrieving metadata associated with the image capture device at the time of image capture and employing retrieved metadata as at least one parameter within the said expression.

Stokseth's approximation can advantageously be employed within the invention for computational convenience, although the more accurate Hopkin's model could likewise be used.

The present invention provides a method for obtaining a more accurate psf that can include a circularly symmetric structure whilst requiring at most a single parameter to be provided by the user, namely (*w* in Equation 2).

Turning to the imaging process, this can be described by the following equation:

$$f(x,y) = h(x,y) \otimes o(x,y) + n(x,y \qquad (3)$$

where f(x, y) is the resulting image after blurring with the camera optics, h(x, y) is the psf of the optics, o(x, y) is the underlying "true" image, n(x, y) is a noise process, and $\otimes$ denotes the operation of convolution. It is assumed that the noise is Gaussian, Poisson or a combination of the two.

In the frequency domain Equation 3 is:

$$F(u, v) = H(u, v).O(u, v) + N(u, v) \qquad (4)$$

Where upper case denotes the Fourier transform of the corresponding quantity from Equation 3.

The process of deconvolution seeks to solve Equation 3 for the underlying image o(x, y) given the data f(x, y), the psf h(x, y) and some information about the statistics of the noise, n(x, y). Many techniques exist to accomplish this including inverse filtering, Weiner filtering, least squares techniques, expectation maximization and maximum entropy. In some embodiments of deconvolution the processing of a digital image attempts to solve for the camera psf, h(x, y) as well as the underlying true image, o(x, y). These so-called "blind" deconvolution techniques also benefit from the present invention as the number of unknown parameters is reduced and in "parametric blind" deconvolution a functional form for h(x, y) can be assumed, eg Eq2, where all but one of the parameters is known a priori from the metadata.

The invention therefore advantageously obtains parameters required for the said expression from information that is either available a priori ($\lambda$), or is available automatically from the digital image metadata (A and $d_i$) or is available from a user provided input (w).

Further, the present invention therefore seeks to advantageously employ information in the metadata attached to a digital image, in one form such data comprises EXIF (Exchangeable Image File Format) data, to provide at least one of the parameters required to describe the condition of the camera optics at the time the image was recorded and in order to generate a psf or OTF, from an equation for example similar to that of Hopkins or Stokseth, or by a blind deconvolution technique, for the purposes of deconvolution of the image to remove the effects of the out of focus blur.

The application of the invention is described further hereinafter by way of example only, with reference to the accompanying drawings in which:

Fig. 1 illustrates the image forming process within a lens arrangement; and
Fig. 2 is a representation of a blurred circular image.

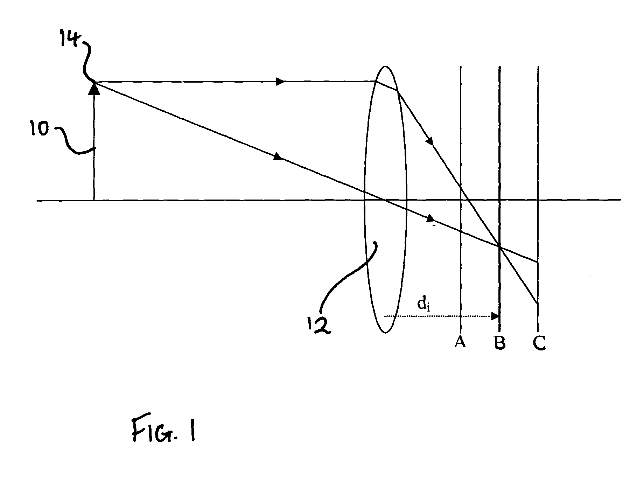

Turning first to Fig. 1, there is shown schematically the image formation process from an object 10 through a lens 12 to an image plane at positions A, B and C. The end point 14 of the object is brought to a focus on the image plane a distance $d_i$ behind the lens at position B. If the image plane is at a distance less than $d_i$, such as at position A from the lens, the end point of the object will appear as a "circle of confusion". A similar situation occurs if the image plane is at a distance greater than $d_i$ from the lens, such as at position C. With the image plane at positions A or C the light that should have been brought to a focus, i.e. at a point where the two lights rays intersect, is spread out over the lens point spread function (psf) as an approximate circle shown schematically in the diagram as the points where the two light rays cross the image plane.

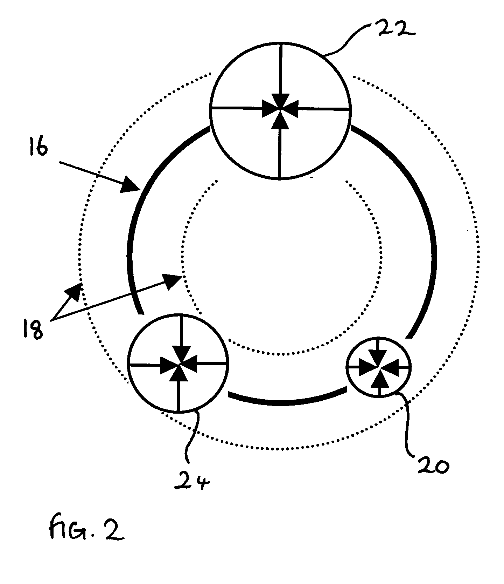

Such a circle of confusion is illustrated further with reference to Fig. 2.

Fig. 2 shows schematically a circular object represented by the bold circle 16 that has been blurred. The inner and outer extremes of this blur are shown as the two dashed circles 18 concentric with the bold circle 16. The effect of the deconvolution process is also shown when the psf or "circle of confusion" is set too small such as in case 20, or too large such as in case 22, or correctly as in case 24. In case 24, the optical blurring process due to the "circle of confusion" is reversed. The psf used in the deconvolution matches the psf of the lens optics and "light", represented digitally in the image data, is put back into the correct position by the deconvolution process. In case 20 the psf used in the deconvolution is too small and the image will not be sufficiently corrected. In case 22 the psf used in the deconvolution is too large and the image will be over-corrected. Both cases 20 and 22 fail therefore to achieve the defocusing available with a circle of confusion having the radius shown in case 24.

The present invention solves the deficiencies in existing deconvolution methods available for digital photography through the provision of parameters to an accurate model of the way the camera optics blur the image. The present invention advantageously employs metadata attached to an image file to provide these parameters to a model, for example to Stokseth's or Hopkins' mode that allows a psf or OTF to be calculated that more correctly characterizes the settings of the camera lens at the time the digital image was captured.

The metadata available from the EXIF ("Exchangeable Image File Format for digital still cameras") published by the Japan Electronics and Information Technology Industries Association, document JEITA CP-3451 (for example) provides data including Camera Manufacturer, camera model, lens aperture setting (the "f-number"), aperture value, focal length of lens, focal plane resolution in x and y and focal plane resolution units. This information can be used in Stokseth's equation (Eq. 2) to generate the OTF.

The lens-settings at the time a digital image is taken are characterized by the "f-number", this is defined as:

$$f\# = \frac{f}{A} \qquad (5)$$

where $f$ is the focal length of the lens and $A$ is the lens aperture (diameter). This value can be substituted into the equation for $f_c$ and in turn into the equation for $s$ (shown immediately after Equation 1):

$$f = \frac{2A}{\lambda d_i} \approx \frac{2A}{\lambda f} = \frac{2}{\lambda f\#} \Rightarrow s = \frac{2q}{f_c} \approx q\lambda f\# \qquad (6)$$

where it is assumed, for objects at a large distance from the lens (large relative to the focal length of the lens), that the distance of the imager from the lens is approximately equal to the focal length of the lens, ie $d_i \approx f$.

There are two other pieces of information that are advantageously required. The first is the physical size of the imaging device. The image is recorded by a device that spatially samples the light distribution in the image plane. The characteristic units of distance in the image are in terms of these sample points. The image metadata provides a means to convert from image sample points (pixels - picture elements) to physical units, eg pixels per inch. EXIF metadata provides this as "image resolution in width X direction" and "image resolution in height Y direction" and "unit of X and Y direction". In cases where this information is not provided by the metadata it may be obtained by inference from the camera manufacturer and camera model type that is often provided in image metadata, eg EXIF.

A final piece of information required is the amount of the defocus, $w$ in Equations 1 and 2. In our embodiment of the present invention this is provided by user input using a slider device displayed on a computer screen, although other input devices would be possible as well. "Parametric blind" deconvolution techniques that employ the available lens information, a model of the OTF, for example in the form of Equation 2, and that estimate the parameter $w$ as well as the underlying true image $o(x, y)$ also benefit from the present invention.

The present invention is primarily intended to be embodied as a computer program that is arranged to read the image data and any associated metadata so as to:

a) initiate a model of the lens based on the simple circle of confusion (radius $R$) where the user adjusts the radius of the circle with a slider displayed on a computer screen, or

b) initiate a model of the lens based on Equation 2

where the user adjusts the single unknown parameter, the defocus parameter $w$, with, for example, a slider displayed on a computer screen.

In one embodiment of the present invention, a signal to the user can be generated to identify which model is being used by displaying "LensFit OFF" for the first case, or "LenseFit ON" for the second case where metadata is used.

In either case as the slider is adjusted to vary the unknown parameter (either $R$ or $w$) the OTF is recomputed and a deconvolved preview of part of the image is displayed in a preview window in real-time. The use of Stokseth's approximation to the OTF calculation facilitates this real-time display of the partial result.

It should therefore be appreciated that the invention can advantageously provide for a method of obtaining metadata from an image file that enables a more accurate model of the camera lens OTF to be used in deconvolution to reverse the effects of out of focus blur.

The present invention can advantageously be presented so as to provide the missing parameter, i.e. the defocus amount $w$ to the model of the camera blur by means of a slider controlling this quantity and a real-time feedback of the results to allow the user to adjust this parameter to give the best result. Further, the use of metadata in "Parametric Blind" deconvolution advantageously reduces the number of unknowns in a model of the camera optics used to generate the OTF to one single parameter, $w$, that has to be estimated along with the underlying true image $o(x, y)$.

**Claims**

1. A method of deconvolving a digital image captured by way of a lens arrangement of an image capture device including, in combination with an expression representative of the optical transfer function of the lens arrangement, the step of retrieving metadata associated with the image capture device at the time of image capture and employing retrieved metadata as at least one parameter within the said expression.

2. A method as claimed in Claim 1 and including imposing circular symmetry on the optical transfer function.

3. A method as claimed in Claim 1 or 2, wherein the said metadata comprises at least lens aperture and distance of the light sensitive surface from the lens.

4. A method as claimed in any one or more of Claims 1, 2 or 3, wherein the said expression comprises Hopkins' model.

5. A method as claimed in Claim 4, wherein the said expression comprises Stokseth's approximation of Hopkins' model.

6. A method as claimed in Claim 1, 2 or 3 and arranged as part of a blind deconvolution technique.

7. A method as claimed in Claim 6, wherein the said deconvolution technique comprises a parametric blind deconvolution technique.

8. A method as claimed in any one or more of the preceding claims, wherein the said metadata comprises EXIF data.

9. A method as claimed in any one or more of Claims 1-8, wherein the deconvolution involves user-adjustment of a single unknown parameter of the expression.

10. A method as claimed in Claim 9, wherein the said unknown parameter comprises the defocus parameter of the expression.

11. A method as claimed in any one or more of Claims 1-10, and including the step of displaying a deconvolved preview part of the image in a preview window in real-time.

12. A data processing system for the deconvolution of a digital image capture by way of a lens arrangement of an image capture device including means for retrieving metadata associated with the image capture device at the time of image capture and means for employing retrieved metadata as at least one parameter within an expression representative of the optical transfer function of the lens arrangement.

**13.** A data processing system as claimed in Claim 12, and arranged to operate in accordance with a method as defined in any one or more of Claims 2-11.

**14.** A computer program product comprising a computer readable medium, having thereon:

computer program code means, when said program is loaded, to make a computer execute procedure for deconvolving a digital image captured by way of a lens arrangement of an image capture device including, in combination with an expression representative of the optical transfer function of the lens arrangement, the step of retrieving metadata associated with the image capture device at the time of image capture and employing retrieved metadata as at least one parameter within the said expression.

**15.** A computer program element comprising:

computer program code means to make a computer execute a procedure for deconvolving a digital image captured by way of a lens arrangement of an image capture device including, in combination with an expression representative of the optical transfer function of the lens arrangement, the step of retrieving metadata associated with the image capture device at the time of image capture and employing retrieved metadata as at least one parameter within the said expression.

**16.** A computer program element as claimed in Claim 15 embodied on a computer readable medium.

**17.** A processing apparatus having the computer program element as claimed in Claim 15.

FIG. 1

fIG. 2